# EUROPEAN PATENT SPECIFICATION

(11) **EP 3 277 458 B1**
(45) Date of publication and mention of the grant of the patent: **11.09.2019**
(21) Application number: 16714516.8
(22) Date of filing: 30.03.2016
(51) Int. Cl.: B23Q 11/00, B08B 15/04, E21B 21/015

(54) **A CUTTING JIG**
SCHNEIDVORRICHTUNG
GABARIT DE COUPE

(30) Priority: 31.03.2015 GB 201505513
(43) Date of publication of application: 07.02.2018
(73) Proprietor: Zuma Array Limited, London EC2A 3EQ (GB)
(72) Inventor: COOK, Susan, London SE4 2LR (GB); DE SAULLES, Stephen, London N1 8LB (GB)
(74) Representative: Boult Wade Tennant LLP
(86) International application number: PCT/GB2016/050893
(87) International publication number: WO 2016/156840

(56) References cited:
- WO-A1-2008/000865
- DE-B3-102006 018 976
- FR-A1- 2 324 401
- GB-A- 2 335 032
- US-A- 5 987 698

## Description

The present disclosure relates to a cutting jig. In particular, it relates to a cutting jig for forming holes in work pieces while at the same time collecting dust and debris created by the hole-forming process. The disclosure also extends to an associated cutting aid, kits of parts and a method.

The present disclosure finds particular application for the fitting of luminaires (or other articles) in walls or ceilings, especially, but not limited to, where a pre-existing hole of smaller diameter is present.

### Background

Cutting holes in work pieces inevitably creates a quantity of dust and/or debris. The amount of dust and/or debris created is partly dependent on the nature of the material of the work piece being cut. Work pieces that are formed from materials having some friability are particularly prone to dust formation during cutting. A well-known example is sheet material in the form of plasterboard which is typically formed of gypsum plaster compressed between covering sheets of paper. The plasterboard may be optionally overlaid with a plaster skim coat and/or paint coat.

In domestic, retail or office environments lighting is often provided by luminaires which may be of a type which are ceiling-mounted so as to project light downwards. Typically, such luminaires are mounted through a circular hole cut into the material of the ceiling, which is often plasterboard overlaid with a plaster skim coat and a paint coat. The circular hole may be formed using a specialist cutting element, for example, a hole cutter attached to a work tool, e.g. a mains or battery powered electric hand drill.

A first problem encountered in forming such holes in plasterboard or similar material is the considerable dust generated. This dust becomes airborne and creates significant mess - especially when, as with most luminaires, the hole being cut is overhead.

A second problem may be encountered if a pre-existing hole is present at or near the desired location for the new hole. For example, unless the replacement luminaire is carefully selected so that is can re-use the existing hole un-modified it may be necessary to form a larger hole that partly or wholly encompasses the pre-existing hole. Larger holes may be required for larger luminaires or, for example, for modern units which may combine luminaires with loudspeakers which are typically larger than light-only fittings. Traditional hole cutters for use in plasterboard or similar materials typically use a central conventional twist drill bit of relatively small diameter to create an initial central hole to then guide the cutting of a larger hole by a secondary blade. This secondary blade is typically either a single cylindrical saw blade or a pair of cutters symmetrically arranged on a bar that rotates with the drill bit.

However, where there is a pre-existing hole where an old luminaire (or other article) has been removed from the plasterboard, then there is nothing to locate the twist drill bit, and therefore there is no means for controlling the position of the new hole. Attempting to drill without guidance can result in significant damage to the work piece, in particular when working overhead on a ceiling, as the cylindrical saw can grip unpredictably and may skid across the surface of the work piece.

GB2335032 discloses a dust collection device comprising a transparent plastics housing a means for attachment of the housing to a vacuum pump. The housing has an aperture for receipt of a dust causing drill bit during use.

### Summary of the Disclosure

According to a first aspect of the present disclosure, there is provided a cutting jig comprising:
an annular body defining a dust-removal chamber and a central bore for receiving, in use, a cutting element of a work tool;
the annular body comprising an outer wall which terminates at an outer rim and an inner wall which defines the central bore and terminates at an inner rim; the outer and inner rims together defining an open mouth of the dust-removal chamber, wherein the open mouth is engageable, in use, against a work piece to be cut;
wherein the outer rim comprises an outer sealing edge for forming a seal, in use, with the work piece and the inner wall comprises one or more inlets for permitting passage of air and dust from the central bore into the dust-removal chamber;
wherein the annular body further comprises a suction port through which, in use, air and dust may be extracted from the dust-removal chamber; and
wherein the cutting jig comprises one or more bearings for contacting, in use, the cutting element; characterised in that the cutting jig further comprises a plurality of bearings protruding from the inner wall into the central bore for contacting, in use, the cutting element. Beneficially this results in less friction between the cutting jig and the cutting element.

Advantageously, the cutting jig permits the accurate cutting of holes even where there is a pre-existing hole in the work piece by using the one or more bearings of the cutting jig to guide the cutting element in rotation. This permits the new hole to be aligned on the same axis as the pre-existing hole or off-axis as desired. Advantageously, the cutting jig may be accurately and precisely located prior to staring a cutting operation and during the cutting operation the guiding contact of the one or more bearings helps to ensure precise and accurate location of the hole.

Further, the cutting jig, with its dust-removal chamber and suction port, enables dust and debris created during cutting of the work piece to be easily and cleanly captured and removed to waste through the suction port.

A further advantage of the cutting jig is that it may be attached to the work piece in a self-supporting manner due to the suction force applied to the suction port by, for example, a vacuum device, e.g. a vacuum cleaner. The suction force applied at the suction port creates an associated suction force at the open mouth of the dust-removal chamber allowing the annular body to 'stick' itself to the work piece - even where this is an overhead ceiling. This permits a user to stick the cutting jig to the work piece and then have both hands free to control and operate the work tool. The self-supporting nature of the cutting jig also improves the ability to precisely and accurately locate the cutting jig on the work piece, especially when working at difficult angles, e.g. overhead. For example, the cutting jig may be positioned and then the user may let go of the cutting jig allowing the user to re-position themselves (e.g. take a step back) to better view and determine the accurate alignment of the cutting jig before commencing the cutting operation.

Further, providing the body in an annular form with a central bore allows the cutting jig to be attached to the work piece in a self-supporting manner even where there is a pre-existing hole since the suction force is applied around an annulus of the work piece that is still intact - in other words the pre-existing hole is fully located within the extent of the central bore and is thereby isolated from the suction port.

The one or more bearings may allow the cutting element to be guided in rotation.

In one example, the plurality of bearings are a plurality of rolling element bearings, preferably three or more rolling element bearings being present which may optionally be equi-spaced around a circumference of the inner wall. The rolling element bearings may each be a roller element that is rotatably mounted to a fixed location of the inner wall. Alternatively, the rolling element bearings may be a plurality of ball bearings mounted in a race formed in the inner wall. In another alternative, the rolling element bearings may be rotating wheels.

A further advantage of the use of a plurality of bearings protruding from the inner wall into the central bore is that in use the cutting element is thereby kept spaced from the inner wall by the distance that the bearings protrude into the central bore while still accurately guiding the movement of the cutting element in rotation. The annular clearance gap so formed may beneficially allow easier flow of air, dust and debris from the central bore through the one or more inlets. Preferably the annular clearance gap is from 2 to 5 mm.

Optionally, the plurality of bearings may be mounted to the inner wall in an adjustable manner, allowing the degree of protrusion of the plurality of bearings into the central bore to be adjustable. The adjustment mechanism may permit cutting elements of different diameters to be used with the same cutting jig or may simply be used to tune the size of the cutting jig to a particular cutting element thereby ensuring smooth and accurate guidance of the cutting element by the bearings. For example, each bearing may be indirectly coupled to the inner wall by means of a mounting that is moveable relative to the inner wall. In one example each bearing is mounted to a bearing plate which is rotatably coupled to the annular body. A mechanism may be provided to adjust the position of each bearing plate relative to the inner wall. In one example, a cover plate and handle are provided wherein the cover plate comprises one or more cam slots which engage with one or more upstands provided on each bearing plate. The handle allows rotation of the cover plate with respect to the annular body resulting in motion of the bearing plates due to cam action between the cam slots and the upstands. The degree of protrusion of the bearings into the central bore can be set by means of retaining the handle in a desired position, e.g. by use of a sprung catch that can be selectively engaged in one of a number of indexed blind apertures.

Preferably, the outer sealing edge may be deflectable and/or compressible and/or compliant. This helps to ensure that an air -tight seal is created between the outer sealing edge and the work piece even where the surface of the work piece may be rough or have bumps, depressions or other irregularities. For example, the outer sealing edge may be in the form of a deflectable lip. The deflectable lip may have a resting shape in which it is angled relative to the outer wall, for example at approximately 45°, so as to be directed towards the inside or outside of the annular body. Other geometric shapes for the outer sealing edge may be used which result in a degree of compliance or compressibility. For example the outer sealing edge may be in the form of a bellows.

The outer sealing edge may be formed from a compliant or compressible material. For example, the outer sealing edge may be formed of a soft plastics material, e.g. a thermoplastic elastomer, a rubbery material or a foamed material, e.g. closed-cell thermoplastic foam. Preferably, the outer edge may be formed from non-marking material.

The main part of the annular body may be preferably transparent and may, for example be formed from polycarbonate (PC), polypropylene (PP), polyvinyl chloride (PVC), polystyrene (PS), acrylonitrile butadiene styrene (ABS), poly-methyl methacrylate (PMMA), styrene block copolymers (SBC), styrene methylmethacrylate (SMMA), cellulosic, polyamide (PA) or polyethylene terephthalate (PET). Forming the annular body from a transparent material may allow for easier positioning of the cutting jig, especially when working overhead, since the alignment of the central bore with any pre-existing hole can be seen even when the cutting jig is viewed from the side or at an acute angle. In addition, the transparency of the annular body allows a user to visually confirm that the dust and debris is being extracted out of the suction port.

The outer sealing edge may be formed of a different material to the main part of the annular body. In one example, the outer sealing edge may comprise an outer edge strip which is co-moulded to the annular body.

The one or more inlets may comprise apertures in the inner wall. Preferably, permanently-open apertures are used. The one or more inlets may be spaced from the rim of the inner wall but are preferably located at the inner rim. Preferably, the one or more inlets are evenly spaced around the entire circumference of the inner wall. In one example the inner rim has a castellated shape and the one or more inlets comprise a plurality of gaps formed at the inner rim by the castellated shape.

The inner rim may comprise an inner edge for forming a partial seal, in use, with the work piece. Preferably, the inner edge may be formed from non-marking material.

The inner edge may comprise an inner edge strip which is co-moulded to the annular body.

Preferably the annular body is toroidal. While the annular body has a ring shape it is not necessary that the ring shape is strictly round in plan view. For example the annular body may be elliptical in plan view. In addition, the outer wall may have a square or rectangular shape in plan view even though the inner wall will be preferably round in shape in plan view to match the shape of the cutting element. However, in a preferred example the outer wall and inner wall extend concentrically to one another. In a most preferred example the outer and inner wall are both circular in plan view and concentric to one another.

The cross-sectional shape of the toroid may be, for example, a C-shape wherein the outer wall and the inner wall are joined by an end wall opposite the open-mouth. The outer wall, inner wall and/or end wall may all be straight-sided or curved. For example, it is envisaged that the outer wall, inner wall and end wall may all form one continuous curved wall section.

In one example the suction port comprises an aperture in the annular body for directly connecting a hose of a vacuum device. Alternatively, the suction port may comprise an adapter, preferably tapered and compliant or formed of elastomeric material to provide a good seal, extending from the annular body for connecting a hose of a vacuum device. The provision of the adapter allows easier coupling of a range of vacuum devices to the suction port.

The central bore preferably has a diameter in the range of 50 to 250 mm.

In one example, the annular body may comprise two or more body parts, including at least an outer body part comprising the outer wall and an inner body part comprising the inner wall, wherein the two or more body parts may be connected and disconnected from one another. Preferably, the cutting jig further comprises at least a first inner body part defining a central bore of a first diameter and a second inner body part defining a central bore of a second diameter, wherein the first or second inner body parts may be selectively interchangeably coupled to the outer body part to produce a cutting jig having a central bore of selectable diameter. In this way, the cutting jig can be adjusted to be useable with cutting elements of different diameters.

According to a second aspect of the present disclosure, there is provided a cutting aid comprising a cutting jig as described above and a vacuum device that is integrally connected to the suction port of the annular body. In this way a dedicated vacuum device can be provided that does not need to be coupled and decoupled from the suction port when not in use.

According to a third aspect of the present disclosure, there is provided a kit of parts comprising a cutting jig as described above and a cutting element of a work tool, wherein an outer diameter of the cutting element is sized so as to be receivable within the central bore of the cutting jig to allow the cutting element to be guided in rotation by the one or more bearings.

Preferably the cutting element is sized so as to be receivable within the central bore of the cutting jig so as to provide an annular clearance gap, in use, between the cutting element and the inner wall, wherein preferably the annular clearance gap is from 2 to 5 mm.

Preferably the cutting element is sized so as to be receivable within the central bore of the cutting jig and to be in bearing contact, in use, with the plurality of bearings of the cutting jig.

According to a fourth aspect of the present disclosure, there is provided a kit of parts comprising a cutting jig as described above and one or more luminaires, wherein the central bore of the cutting jig is sized to allow formation of a hole in a work piece of a required size for fitment of the luminaires.

According to a fifth aspect of the present disclosure, there is provided a method of cutting a hole in a work piece using a cutting jig, or a cutting aid, or a kit of parts as described above, the method comprising the steps of:
a) applying a suction force to the suction port of the cutting jig;
b) locating the cutting jig on the work piece with the central bore of the cutting jig being aligned with a desired location for the hole to be cut;
c) engaging the outer and inner rims of the cutting jig to the work piece to attach and retain the cutting jig on the work piece in a self-supporting manner;
d) inserting a cutting element of a work tool into the central bore and operating the work tool to drive the cutting element to cut the hole in the work piece while simultaneously drawing air and dust from the central bore into the dust-removal chamber through the one or more inlets and extracting air and dust from the dust-removal chamber of the cutting jig through the suction port;
e) removing the cutting element from the central bore; and
f) in either order: detaching the cutting jig from the work piece and removing the suction force from the suction port.

In one example, cutting the hole in the work piece comprises enlarging a pre-existing hole of the work piece located at or near the desired location, wherein in step b) the cutting jig may be located on the work piece with the central bore overlying the pre-existing hole. Advantageously, as noted above, use of the cutting jig permits the accurate cutting of holes even where there is a pre-existing hole in the work piece by using the central bore to guide the cutting element.

In one example the method is applied for cutting a hole in a wall or ceiling for fitting a luminaire or similar article.

In the present disclosure reference to cutting of a hole in the work piece refers not only to a sharp penetrating action, such as incision by a blade, but is also intended to cover sawing, drilling, abrading or otherwise breaking or separating the material of the work piece to form a hole. References to a cutting element should be understood likewise.

In the present disclosure reference to a work piece is to be understood to refer to any item in which it is desired to form a hole. The disclosure finds particular application with work pieces that are in the form of sheets and, more particularly, work pieces that form structural or cosmetic fixtures of buildings, e.g. walls and ceilings formed of sheet plasterboard or similar.

In the present disclosure reference to a work tool is to be understood to refer to any device capable of operatively driving the cutting element. An example is an electric hand drill.

In the present disclosure reference to a vacuum device is to be understood to refer to any device able to produce a suction force. Examples include domestic and industrial vacuum cleaners.

### Brief Description of the Drawings

Embodiments of the present disclosure will now be described, by way of example only, with reference to the accompanying drawings, in which:
Figure 1 is a perspective view from below of a cutting jig according the present disclosure;
Figure 2 is an enlarged view of a portion of Figure 1;
Figure 3 is a perspective view from above of a portion of the cutting jig of Figure 1;
Figure 4 is a view similar to Figure 1, with a vacuum device coupled to the cutting jig;
Figure 5 is another perspective view of the cutting jig and coupled vacuum device;
Figure 6 is a perspective view of the cutting jig and a cutting element of a work tool;
Figure 7 is a perspective view of the cutting jig and cutting element with the cutting element located in a central bore of the cutting jig;
Figure 8 is a schematic, partially exploded, view of another cutting jig according to the present disclosure;
Figure 9 is a schematic assembled view of the cutting jig of Figure 8;
Figures 10 and 11 are plan views of the cutting jig of Figure 8 in a first and a second configuration respectively;
Figure 12 is a schematic, partially exploded, view of another cutting jig according to the present disclosure; and
Figure 13 is a perspective view of a cutting jig according to the present disclosure having a tapered adapter for connection to a vacuum cleaner hose.

### Detailed Description

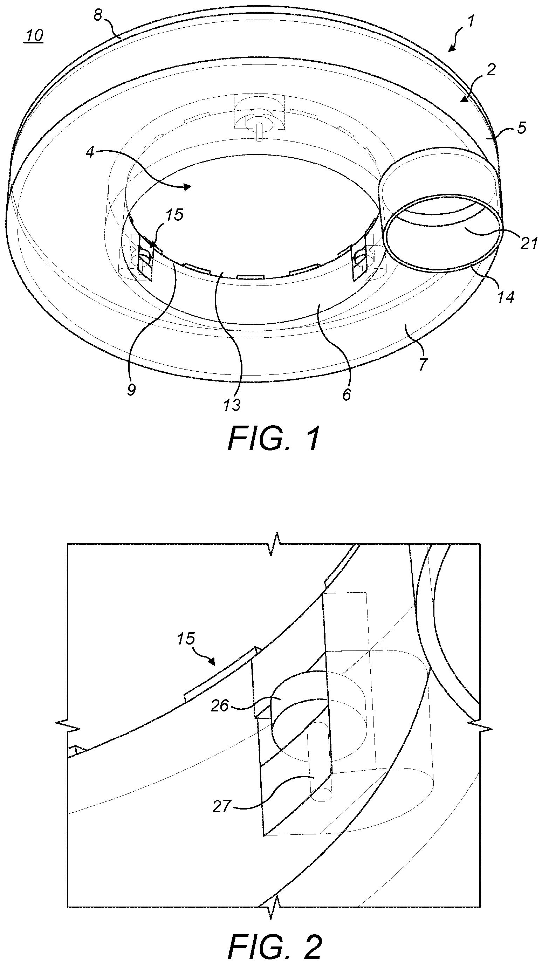

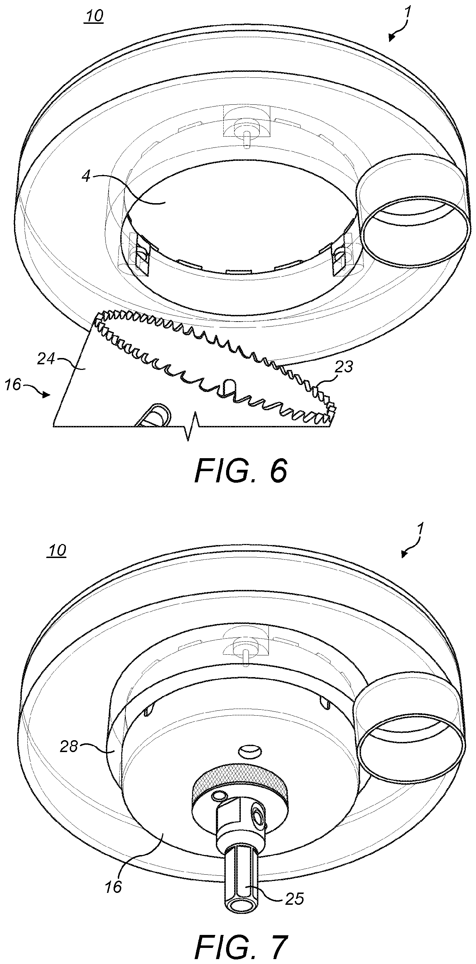

Figures 1 to 7 illustrate an example of a cutting jig 1 according to the present disclosure. As shown in Figure 1, the cutting jig 1 comprises an annular body 2 which defines a central bore 4 which in use is sized to receive a cutting element 16 of a work tool as shown in Figures 6 and 7.

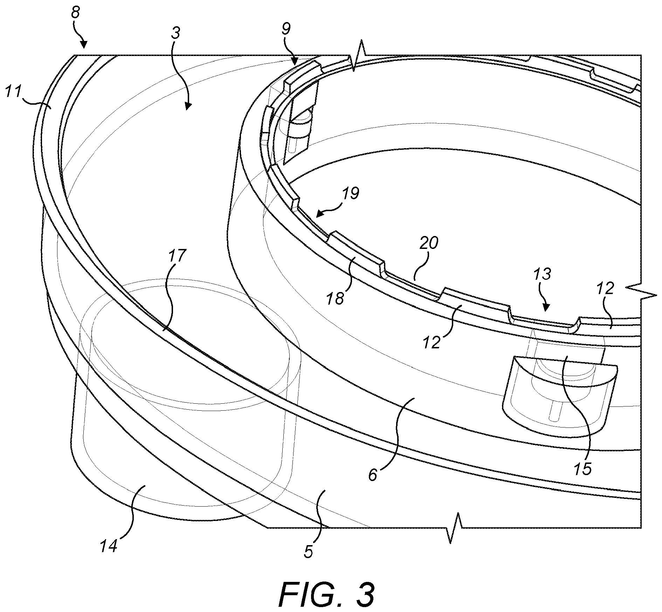

The annular body 2 comprises an outer wall 5 which terminates at an outer rim 8 and an inner wall 6 which defines the central bore 4 and terminates at an inner rim 9. As most clearly seen in Figure 3, the outer and inner rims 8, 9 together define an open mouth of a dust-removal chamber 3 located within the annular body 2. The outer and inner walls 5, 6 are connected by an end wall 7. The annular body 2 is toroidal in shape with the outer wall 5, inner wall 6 and end wall 7 having a C-shape when viewed in cross-section.

The outer wall 5 may have a diameter of 70 to 350 mm or more and the inner wall 6 / central bore 4 may have a diameter in the range of 50 to 250 mm or more. The depth of the cutting jig 1 may be from 15 to 40 mm.

The annular body 2 may be formed from a transparent, impact-resistant, rigid plastics material such as polycarbonate (PC). The annular body 2 may be moulded.

As shown in Figure 3, the outer rim 8 comprises an outer sealing edge 11 which can form a seal, in use, with a work piece 10. The outer sealing edge 11 may simply be a free edge of the outer wall 5 but is preferably formed as an outer edge strip 17 made from a compliant or compressible material which may be co-moulded or otherwise attached to a remainder of the outer wall 5. Suitable examples of materials include soft thermoplastic elastomers. The outer edge strip 17 may be deflectable and/or compressible and/or compliant due to its shape and/or material characteristics. The outer edge strip 17 as shown is angled outwardly at an angle of approximately 45° relative to the faces of the outer wall 5. The outer sealing edge 11, formed by the distal edge of the outer edge strip 17, has a continuous level around the circumference of the cutting jig 1.

Also as shown in Figure 3, the inner rim 9 comprises an inner edge 12 which can engage, in use, the work piece 10. The inner edge 12 may simply be a free edge of the inner wall 6 which is dimensioned to be spaced in use from the work piece 10. However, preferably the inner edge 12 has a castellated edge profile 19 around the circumference of the cutting jig 1 so as to define a plurality of gaps 20 which function as inlets 13 as will be described below and a plurality of portions that are engageable against the work piece 10. The inner edge 12 may be formed as an inner edge strip 18 made from a non-marking material which may be co-moulded or otherwise attached to a remainder of the inner wall 6. Suitable examples of materials include hard thermoplastic elastomers.

The annular body 2 is provided with a suction port 14 in the end wall 7 which defines a suction port aperture 21 that fluidly connects the dust-removal chamber 3 with an exterior of the cutting jig 1.

The cutting jig 1 is further provided with three bearings 15 protruding from the inner wall 6 into the central bore 4. The bearings 15 are equi-spaced around the circumference of the inner wall 6. Each of the bearings 15 comprises a rolling element bearing in the form of a roller 26 rotatably mounted on an axle 27 which is mounted to the inner wall 6. The axle 27 is orientated parallel to a longitudinal axis of the central bore 4 so that the rollers 26 rotate about an axis parallel to the longitudinal axis of the central bore 4. Each roller 26 protrudes slightly into the central bore 4 by a distance of 2 to 5 mm.

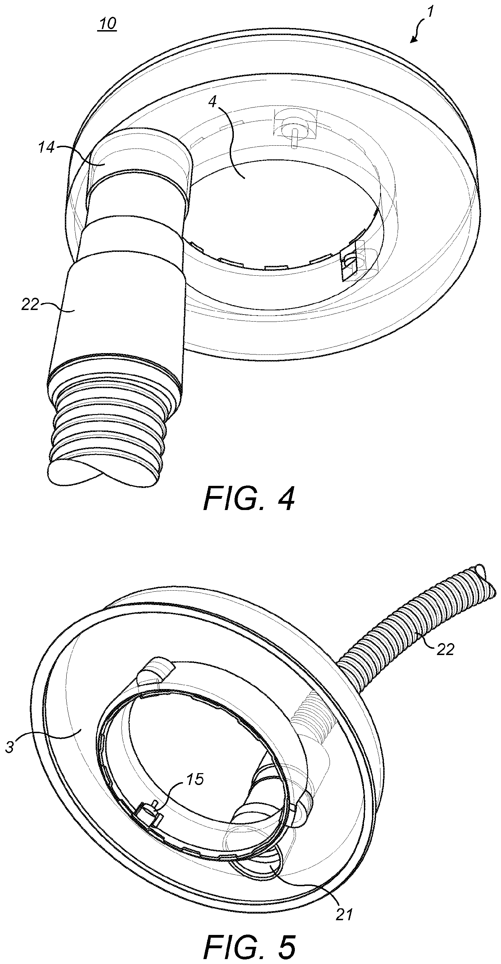

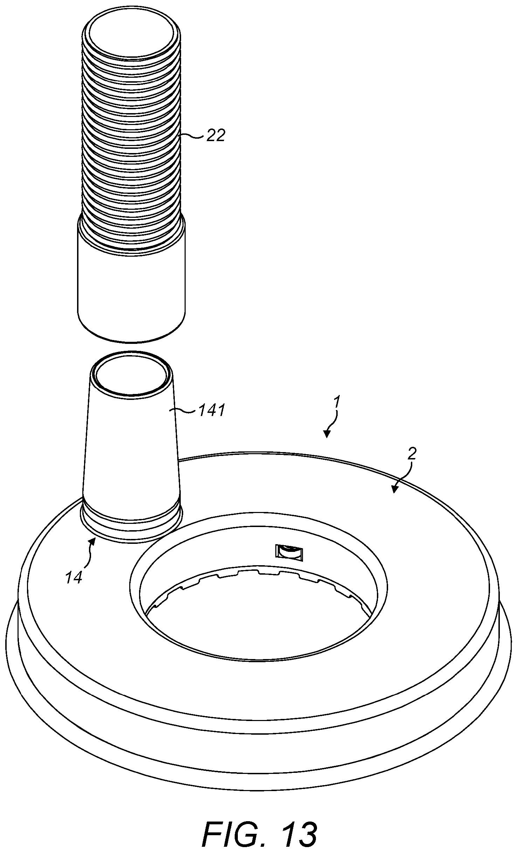

To use the cutting jig 1 a vacuum device, e.g. a vacuum cleaner, is first coupled to the suction port 14. As shown in Figures 4 and 5, a hose 22 of the vacuum cleaner may be directly connected to the suction port 14.The suction port 14 may be provided, as shown in Figure 13, with a tapered adapter 141, extending from the annular body 2, to allow for connecting hoses of varying diameter indirectly to the suction port 14. The tapered adapter 141 may be formed of a compliant material, for example an elastomeric or rubber material, allowing a rigid plastic end of a conventional vacuum cleaner hose to be easily connected while ensuring a fluid-tight seal.

With the vacuum device switched on, a suction force is created at the suction port 14 which creates an associated suction force at the open mouth of the dust-removal chamber 3. The open mouth is then engaged against the work piece 10 to be cut as shown in Figure 4. It should be noted that the cutting jig 1 is located on the work piece 10 with the central bore 4 of the cutting jig 1 being aligned with a desired location for the hole to be cut. Engagement of the cutting jig 1 with the work piece 10 results in engagement of the outer and inner rims 8, 9 with the work piece 10. The outer rim 8 is sealingly attached due to the continuous shape of the outer sealing edge 11 substantially limiting or preventing air transfer past the outer rim 8. The inner rim 9 is attached to the work piece 10 with a partial seal due to the presence of the gaps 20 acting as inlets 13. The inlets 13 allow for a flow of air past the inner rim 9 into the dust-removal chamber 3 from the central bore 4. However, the open area of the inlets 13 is chosen to be small enough that the vacuum device is still enabled to reduce the pressure within the dust-removal chamber 3 to below atmospheric. Thereby the cutting jig 1 can be temporarily 'stuck' to the work piece 10 by the suction effect produced. In this way the cutting jig 1, even with the weight of the attached hose 22, can be engaged in a self-supporting manner on the work piece 10, even where the work piece 10 is an overhead ceiling.

The cutting element 16 of the work tool may then be introduced into the central bore 4 as shown in Figures 6 and 7. In the figures the cutting element 16 takes the form of a cylindrical saw blade 24 having a saw-tooth cutting edge 23. A shaft 25 allows coupling of the cylindrical saw blade 24 to the work tool (which is omitted from Figure 7 for clarity).

The outside diameter of the cutting element 16 is sized so as to be receivable within the central bore 4 of the cutting jig 1. In particular, the cutting element 16 is sized so as to be receivable within the central bore 4 and to be in bearing contact with the bearings 15 protruding from the inner wall 6. Consequently, an annular clearance gap 28 is created as shown in Figure 7 between the cylindrical saw blade 24 and the inner wall 6, preferably of from 2 to 5 mm.

Operating the work tool drives the cutting element 16 in rotation with the cylindrical saw blade 24 being guided by the bearings 15. The saw-tooth cutting edge 23 cuts the hole in the work piece 10. Simultaneously the dust and debris created by the cutting action is drawn from the central bore 4 through the inlets 13 into and then through the dust-removal chamber 3 and extracted from the dust-removal chamber 3 through the suction port 14. Inflowing air can reach the inlets 13 to aid dust capture through the annular clearance gap 28.

Once the hole has been cut the cutting element 16 can be removed from the central bore and, either order, the cutting jig 1 can be detached from the work piece 10 and the vacuum device can be switched off and the hose 22 decoupled from the cutting jig 1.

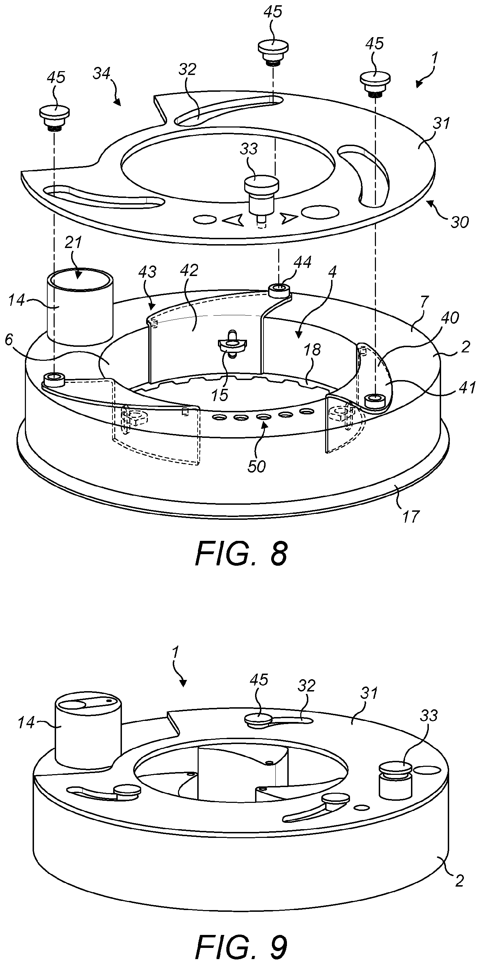

In a modified example as shown in Figures 8 to 11, the bearings 15 may be mounted to the inner wall 6 in an adjustable manner, allowing the degree of protrusion of the bearings 15 into the central bore 4 to be adjustable. In the illustrated example each bearing 15 is mounted to a bearing plate 40 which is rotatably coupled to the annular body 2. Thereby, the bearings 15 are indirectly mounted to the annular body 2 so as to protrude into the central bore 4 by a variable degree.

Each bearing plate 40 comprises an end plate 41 and a curved inner wall plate 42 that is orientated perpendicularly to the end plate 41. Each end plate 41 overlies a portion of the end wall 7 and is rotatably coupled thereto at a pivot point 43 that is proximal the junction with the inner wall plate 42. A female threaded connector 44 is provided at a distal end of the end plate 41. Each inner wall plate 42 extends alongside a portion of the inner wall 6 within the central bore 4.

In addition, a cover plate 30 is provided that is mounted over the end wall 7 as shown in Figure 8. The cover plate 30 comprises three curved slots 32 as well as a sprung catch 33 which can be engaged selectively in a number of indexed apertures 50 provided in the end wall 7 of the annular body 2. The cover plate 30 is provided with a cut-out portion 34 to accommodate the protruding suction port 14 of the annular body 2.

On assembly, the cover plate 30 is mounted over the end wall 7 and the end plates 41 of each bearing plate 40 with the female threaded connectors 44 each aligned and projecting through one of the curved slots 32. Male threaded connectors 45 may then be engaged with the female threaded connectors 44 to retain the cover plate 30 as shown in Figure 9.

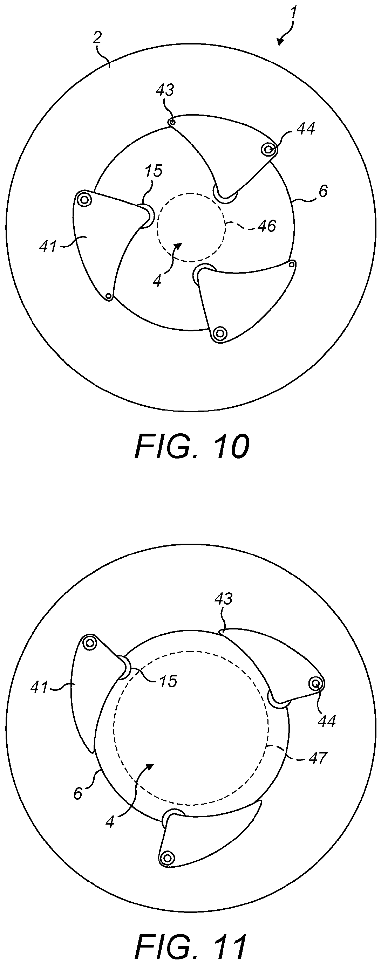

Once assembled, and as shown in Figures 10 and 11, the degree of protrusion of the bearings 15 into the central bore 4 can be altered by operation of the sprung catch 33 as follows. The sprung catch 33 can be lifted up to decouple the sprung catch 33 from the indexed aperture 50 in which it initially resides. The sprung catch 33 can then be used as a handle to rotate the cover plate 30 relative to the annular body either clockwise or anticlockwise. Rotation of the cover plate 30 forces the female and male connectors 44, 45 to slide within the curved slots 32 which consequently forces, by cam action, the bearing plates 40 to rotate about their pivot points 43. Once a desired position of the bearings 15 has been reached the sprung catch 33 can be released into engagement with another of the indexed apertures 50. The location of the indexed apertures 50 can be chosen so that the resulting size of the central bore 4 matches that of commonly-used cutting elements 16.

As shown in Figures 10 and 11, rotation of the bearing plates 40 about their pivot points 43 causes the location of the bearings 15 to be altered with respect to the inner wall 6.

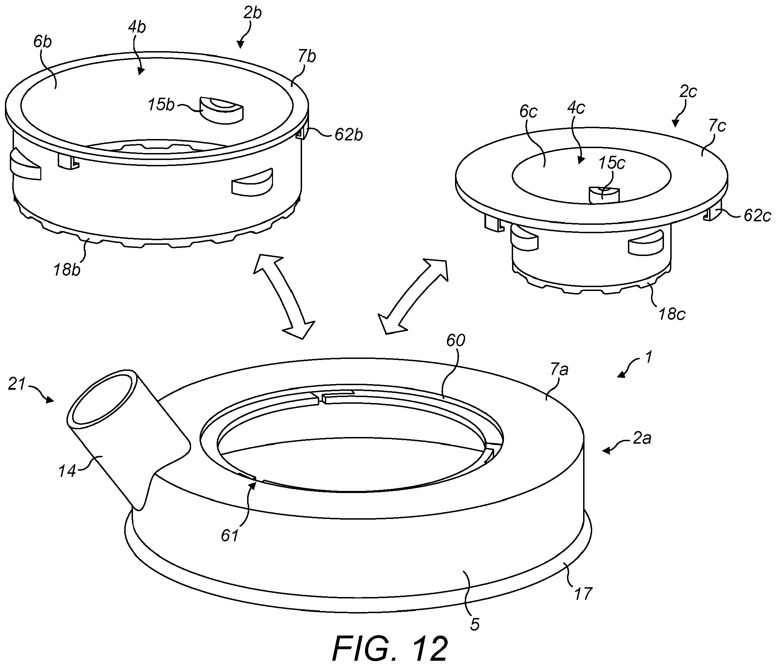

In a modified example as shown in Figure 12, the annular body 2 may comprise two or more body parts, including at least an outer body part 2a comprising the outer wall 5 and an inner body part 2b, 2c comprising an inner wall 6b, 6c, wherein the two or more body parts may be connected and disconnected from one another.

Each inner body part 2b, 2c comprises an end wall portion 7b, 7c in the form of an outwardly-directed flange that projects from the inner wall 6b, 6c. The inner walls 6b, 6c are provided respectively with inner edge strips 18b, 18c and bearings 15b, 15c. The outer body part 2a is provided with the suction port 14 as before but in this case the suction port 14 may be angled away from the perpendicular to provide access for connecting and disconnecting the two or more body parts.

In the illustrated example a first inner body part 2b defines the central bore 4b to have a first diameter (e.g. a relatively large diameter) and a second inner body part 2c defines the central bore 4c to have a second diameter (e.g. a relatively small diameter). The first or second inner body parts 2b, 2c may be selectively interchangeably coupled to the outer body part 2a to produce a cutting jig 1 having a central bore 4 of selectable diameter. This allows the cutting jig 1 to be used with cutting elements 16 of differing sizes so as to produce a range of hole sizes in the work piece 10.

The coupling mechanism, as shown, may comprise inter-engaging clips 61 on the outer body part 2a which can engage with matching clips 62b, 62c on the inner body parts 2b, 2c. An O-ring seal 60 may be provided at the interface between the end wall portion 7a of the outer body part 2a and the end wall portion 7c, 7c of the inner body parts 2b, 2c to prevent escape of dust in use between the parts.

By providing interchangeable inner body parts 2b, 2c of differing diameters that can each be coupled to the outer body part 2a the size of the central bore 4 and location of the bearings 15 can be altered as desired.

The cutting jig 1 may be provided as a kit of parts with one or more cutting elements 16 that are matched in size for receipt in the central bore 4. The cutting jig 1 may also be provided as a kit of parts with one or more luminaires or other articles intended to be wall- or ceiling-mounted, wherein the luminaire or other article is matched in size for fitment in a hole produced by use of the cutting jig 1.

The cutting jig 1 may be provided as part of a cutting aid that has a vacuum device permanently or semi-permanently coupled to the suction port 14.

## Claims

1. A cutting jig (1) comprising:
an annular body (2) defining a dust-removal chamber (3) and a central bore (4) for receiving, in use, a cutting element (16) of a work tool;
the annular body (2) comprising an outer wall (5) which terminates at an outer rim (8) and an inner wall (6) which defines the central bore (4) and terminates at an inner rim (9); the outer and inner rims together defining an open mouth of the dust-removal chamber, wherein the open mouth is engageable, in use, against a work piece (10) to be cut;
wherein the outer rim (8) comprises an outer sealing edge (11) for forming a seal, in use, with the work piece (10) and the inner wall (6) comprises one or more inlets (13) for permitting passage of air and dust from the central bore (4) into the dust-removal chamber (3);
wherein the annular body (2) further comprises a suction port (14) through which, in use, air and dust may be extracted from the dust-removal chamber (3);
wherein the cutting jig (1) comprises one or more bearings for contacting, in use, the cutting element (16); **characterised in that** the one or more bearings comprises a plurality of bearings (15) protruding from the inner wall (6) into the central bore (4) for contacting, in use, the cutting element (16).

2. A cutting jig as claimed in claim 1, wherein the plurality of bearings (15) are a plurality of rolling element bearings, preferably three or more rolling element bearings;
and optionally the plurality of bearings (15) are mounted to the inner wall (6) in an adjustable manner, allowing a degree of protrusion of the plurality of bearings (15) into the central bore (4) to be adjustable.

3. A cutting jig as claimed in any preceding claim, wherein the outer sealing edge (11) is deflectable and/or compressible and/or compliant;
and optionally wherein the outer sealing edge (11) is formed from a compliant or compressible material;
and optionally wherein the outer sealing edge (11) comprises an outer edge strip (17) which is co-moulded to the annular body (2).

4. A cutting jig as claimed in any preceding claim, wherein the inner rim (9) has a castellated shape (13) and the one or more inlets comprise a plurality of gaps (20) formed at the inner rim (9) by the castellated shape (19).

5. A cutting jig as claimed in any preceding claim, wherein the inner rim (9) comprises an inner edge (12) for forming a partial seal;
and optionally wherein the inner edge (12) is formed from a non-marking material;
and optionally wherein the inner edge (12) comprises an inner edge strip (18) which is co-moulded to the annular body (2).

6. A cutting jig as claimed in any preceding claim, wherein the annular body (2) is toroidal.

7. A cutting jig as claimed in any preceding claim, wherein the suction port (14) comprises an aperture (21) in the annular body (2) for directly connecting a hose of a vacuum device; or
wherein the suction port (14) comprises an adapter (141), preferably tapered and compliant or formed of elastomeric material to provide a good seal, extending from the annular body (2) for connecting a hose of a vacuum device.

8. A cutting jig as claimed in any preceding claim, wherein the annular body (2) comprises two or more body parts (2a-2c), including at least an outer body part (2a) comprising the outer wall (5) and an inner body part (2b, 2c) comprising the inner wall (6b, 6c), wherein the two or more body parts may be connected and disconnected from one another;
and optionally further comprising at least a first inner body part (2b) defining a central bore (4b) of a first diameter and a second inner body part (2c) defining a central bore (4c) of a second diameter, wherein the first or second inner body parts (2b, 2c) may be selectively interchangeably coupled to the outer body part (2a) to produce a cutting jig (1) having a central bore (4) of selectable diameter.

9. A cutting aid comprising a cutting jig (1) as claimed in any of claims 1 to 6 or 8 and a vacuum device that is integrally connected to the suction port (14) of the annular body (2).

10. A kit of parts comprising a cutting jig (1) as claimed in any of claims 1 to 8 and a cutting element (16) of a work tool, wherein an outer diameter of the cutting element (16) is sized so as to be receivable within the central bore (4) of the cutting jig (1) to allow the cutting element (16) to be guided in rotation by the one or more bearings.

11. A kit of parts as claimed in claim 10 wherein the cutting element (16) is sized so as to be receivable within the central bore (4) of the cutting jig (1) so as to provide an annular clearance gap (28), in use, between the cutting element (16) and the inner wall (6), wherein preferably the annular clearance gap (28) is from 2 to 5 mm.

12. A kit of parts comprising a cutting jig (1) as claimed in any of claims 1 to 8 and one or more luminaires, wherein the central bore (4) of the cutting jig (1) is sized to allow formation of a hole in a work piece (10) of a required size for fitment of the luminaires.

13. A method of cutting a hole in a work piece (10) using a cutting jig (1) as claimed in any of claims 1 to 8, or a cutting aid as claimed in claim 9, or a kit of parts as claimed in any one of claims 10 to 12, the method comprising the steps of:
a) applying a suction force to the suction port (14) of the cutting jig (1);
b) locating the cutting jig (1) on the work piece (10) with the central bore (4) of the cutting jig being aligned with a desired location for the hole to be cut;
c) engaging the outer and inner rims (8, 9) of the cutting jig (1) to the work piece (10) to attach and retain the cutting jig on the work piece in a self-supporting manner;
d) inserting a cutting element (16) of a work tool into the central bore (4) and operating the work tool to drive the cutting element (16) to cut the hole in the work piece (1) while simultaneously drawing air and dust from the central bore (4) into the dust-removal chamber (3) through the one or more inlets (13) and extracting air and dust from the dust-removal chamber (3) of the cutting jig through the suction port (14);
e) removing the cutting element (16) from the central bore (4); and
f) in either order: detaching the cutting jig (1) from the work piece (10) and removing the suction force from the suction port (14).

14. The method of claim 13, wherein cutting the hole in the work piece (10) comprises enlarging a pre-existing hole of the work piece (10) located at or near the desired location, wherein in step b) the cutting jig (1) is located on the work piece (10) with the central bore (4) overlying the pre-existing hole.

## Patentansprüche

1. Schneidvorrichtung (1), Folgendes umfassend:
einen Ringkörper (2), der eine Entstaubungskammer (3) und eine zentrale Bohrung (4) zur Aufnahme, bei Gebrauch, eines Schneidelements (16) eines Arbeitswerkzeugs definiert;
wobei der Ringkörper (2) eine Außenwand (5), die an einem äußeren Rand (8) endet, und eine Innenwand (6), die die zentrale Bohrung (4) definiert und an einem inneren Rand (9) endet, umfasst; wobei der äußere und der innere Rand zusammen eine offene Öffnung der Entstaubungskammer definieren, wobei die offene Öffnung bei Gebrauch gegen ein zu schneidendes Werkstück (10) in Eingriff bringbar ist; wobei der äußere Rand (8) eine äußere Dichtkante (11) zum Bilden einer Dichtung bei Gebrauch mit dem Werkstück (10) umfasst und die Innenwand (6) einen oder mehrere Einlässe (13) umfasst, um den Durchgang von Luft und Staub aus der zentralen Bohrung (4) in die Entstaubungskammer (3) zu ermöglichen;
wobei der Ringkörper (2) ferner eine Saugöffnung (14) umfasst, durch die bei Gebrauch Luft und Staub aus der Entstaubungskammer (3) abgesaugt werden kann;
wobei die Schneidvorrichtung (1) ein oder mehrere Lager zum Kontaktieren des Schneidelements (16) bei Gebrauch umfasst; **dadurch gekennzeichnet, dass** das eine oder die mehreren Lager eine Mehrzahl von Lagern (15) umfasst, die von der Innenwand (6) in die zentrale Bohrung (4) ragen, um das Schneidelement (16) bei Gebrauch zu kontaktieren.

2. Schneidvorrichtung nach Anspruch 1, wobei die Mehrzahl von Lagern (15) eine Mehrzahl von Wälzlagern, vorzugsweise drei oder mehr Wälzlager, sind; und gegebenenfalls die Mehrzahl von Lagern (15) an der Innenwand (6) in einstellbarer Weise montiert sind,
wodurch ein Überstand der Mehrzahl von Lagern (15) in die zentrale Bohrung (4) einstellbar ist.

3. Schneidvorrichtung nach einem der vorangehenden Ansprüche, wobei die äußere Dichtkante (11) biegsam und/oder komprimierbar und/oder nachgiebig ist;
und gegebenenfalls, wobei die äußere Dichtkante (11) aus einem nachgiebigen oder komprimierbaren Material gebildet ist;
und gegebenenfalls, wobei die äußere Dichtkante (11) einen äußeren Randstreifen (17) umfasst, der an den Ringkörper (2) angeformt ist.

4. Schneidvorrichtung nach einem der vorangehenden Ansprüche, wobei der innere Rand (9) eine Wulstform (13) aufweist und die einen oder die mehreren Einlässe eine Mehrzahl von Lücken (20) aufweisen, die am inneren Rand (9) durch die Zinnenform (19) ausgebildet sind.

5. Schneidvorrichtung nach einem der vorangehenden Ansprüche, wobei der innere Rand (9) eine Innenkante (12) zum Bilden einer Teildichtung umfasst;
und gegebenenfalls, wobei die Innenkante (12) aus einem nicht markierenden Material ausgebildet ist; und gegebenenfalls, wobei die Innenkante (12) einen inneren Randstreifen (18) umfasst, der an den Ringkörper (2) angeformt ist.

6. Schneidvorrichtung nach einem der vorangehenden Ansprüche, wobei der Ringkörper (2) toroidal ist.

7. Schneidvorrichtung nach einem der vorangehenden Ansprüche, wobei die Saugöffnung (14) eine Öffnung (21) in dem Ringkörper (2) zum direkten Anschluss eines Schlauchs einer Vakuumvorrichtung umfasst; oder
wobei die Saugöffnung (14) einen Adapter (141) umfasst, der vorzugsweise konisch und nachgiebig ist oder aus elastomerem Material gebildet ist, um eine gute Abdichtung zu gewährleisten, die sich von dem Ringkörper (2) erstreckt, um einen Schlauch einer Vakuumvorrichtung anzuschließen.

8. Schneidvorrichtung nach einem der vorangehenden Ansprüche, wobei der Ringkörper (2) zwei oder mehr Körperteile (2a-2c) umfasst, einschließlich mindestens eines äußeren Körperteils (2a), das die Außenwand (5) umfasst, und eines inneren Körperteils (2b, 2c), das die Innenwand (6b, 6c) umfasst, wobei die zwei oder mehr Körperteile miteinander verbunden und getrennt werden können;
und gegebenenfalls ferner umfassend mindestens einen ersten inneren Körperteil (2b), der eine zentrale Bohrung (4b) mit einem ersten Durchmesser definiert, und einen zweiten inneren Körperteil (2c), der eine zentrale Bohrung (4c) mit einem zweiten Durchmesser definiert, wobei die ersten oder zweiten inneren Körperteile (2b, 2c) selektiv austauschbar mit dem äußeren Körperteil (2a) gekoppelt werden können, um eine Schneidvorrichtung (1) mit einer zentralen Bohrung (4) mit wählbarem Durchmesser zu erzeugen.

9. Schneidehilfe, umfassend eine Schneidvorrichtung (1) nach einem der Ansprüche 1 bis 6 oder 8 und eine Vakuumvorrichtung, die integral mit der Saugöffnung (14) des Ringkörpers (2) verbunden ist.

10. Satz von Teilen umfassend eine Schneidvorrichtung (1) nach einem der Ansprüche 1 bis 8 und ein Schneidelement (16) eines Arbeitswerkzeugs, wobei ein Außendurchmesser des Schneidelements (16) so bemessen ist, dass er innerhalb der zentralen Bohrung (4) der Schneidvorrichtung (1) aufnehmbar ist, so dass das Schneidelement (16) durch die einen oder die mehreren Lager in Drehung geführt werden kann.

11. Satz von Teilen nach Anspruch 10, wobei das Schneidelement (16) so bemessen ist, dass es innerhalb der zentralen Bohrung (4) der Schneidvorrichtung (1) aufnehmbar ist, um bei Gebrauch einen Ringspalt (28) zwischen dem Schneidelement (16) und der Innenwand (6) bereitzustellen, wobei vorzugsweise der Ringspalt (28) von 2 bis 5 mm beträgt.

12. Satz von Teilen umfassend eine Schneidvorrichtung (1) nach einem der Ansprüche 1 bis 8 und eine oder mehrere Leuchten, wobei die zentrale Bohrung (4) der Schneidvorrichtung (1) so bemessen ist, dass sie die Bildung eines Lochs in einem Werkstück (10) mit einer erforderlichen Größe für das Einpassen der Leuchten ermöglicht.

13. Verfahren zum Schneiden eines Lochs in einem Werkstück (10) unter Verwendung einer Schneidvorrichtung (1) nach einem der Ansprüche 1 bis 8 oder einer Schneidehilfe nach Anspruch 9 oder eines Satzes von Teilen nach einem der Ansprüche 10 bis 12, wobei das Verfahren die folgenden Schritte umfasst:
a) Aufbringen einer Saugkraft auf die Saugöffnung (14) der Schneidvorrichtung (1);
b) Positionieren der Schneidvorrichtung (1) an dem Werkstück (10), wobei die zentrale Bohrung (4) der Schneidvorrichtung auf eine gewünschte Position für das zu schneidende Loch ausgerichtet wird;
c) Eingriff der äußeren und inneren Ränder (8, 9) der Schneidvorrichtung (1) mit dem Werkstück (10), um die Schneidvorrichtung selbsttragend am Werkstück zu befestigen und zu halten;
d) Einsetzen eines Schneidelements (16) eines Arbeitswerkzeugs in die zentrale Bohrung (4) und Betätigen des Arbeitswerkzeugs, um das Schneidelement (16) anzutreiben, um das Loch in das Werkstück (1) zu schneiden, während gleichzeitig Luft und Staub aus der zentralen Bohrung (4) durch die einen oder die mehreren Einlässe (13) in die Entstaubungskammer (3) gezogen werden und Luft und Staub aus der Entstaubungskammer (3) der Schneidvorrichtung durch die Saugöffnung (14) abgezogen werden;
e) Entfernen des Schneidelements (16) aus der zentralen Bohrung (4); und
f) in beliebiger Reihenfolge: Lösen der Schneidvorrichtung (1) von dem Werkstück (10) und Entfernen der Saugkraft von der Saugöffnung (14).

14. Verfahren nach Anspruch 13, wobei das Schneiden des Lochs in dem Werkstück (10) das Vergrößern eines bereits vorhandenen Lochs des Werkstücks (10) umfasst, das sich an oder in der Nähe der gewünschten Stelle befindet, wobei in Schritt b) die Schneidvorrichtung (1) auf dem Werkstück (10) angeordnet ist, wobei die zentrale Bohrung (4) über dem bereits vorhandenen Loch liegt.

## Revendications

1. Gabarit de coupe (1) comprenant :
un corps annulaire (2) définissant une chambre de dépoussiérage (3) et un alésage central (4) pour recevoir, en cours d'utilisation, un élément de coupe (16) d'un outil de travail ;
le corps annulaire (2) comprenant une paroi externe (5) qui se termine au niveau d'un rebord externe (8) et une paroi interne (6) qui définit l'alésage central (4) et se termine au niveau d'un rebord interne (9) ; les rebords externe et interne définissant ensemble une embouchure ouverte de la chambre de dépoussiérage, où l'embouchure ouverte peut venir en prise, en cours d'utilisation, contre une pièce à usiner (10) à couper ;
dans lequel le rebord externe (8) comprend un bord d'étanchéité externe (11) destiné à former un joint d'étanchéité, en cours d'utilisation, avec la pièce à usiner (10) et la paroi interne (6) comprend une ou plusieurs entrée (s) (13) pour permettre le passage de l'air et de la poussière de l'alésage central (4) dans la chambre de dépoussiérage (3) ;
dans lequel le corps annulaire (2) comprend en outre un orifice d'aspiration (14) à travers lequel, en cours d'utilisation, l'air et la poussière peuvent être extraits de la chambre de dépoussiérage (3) ;
dans lequel le gabarit de coupe (1) comprend un ou plusieurs palier(s) pour entrer en contact, en cours d'utilisation, avec l'élément de coupe (16) ; **caractérisé en ce que** le ou les plusieurs palier(s) comprend/comprennent une pluralité de paliers (15) faisant saillie de la paroi interne (6) dans l'alésage central (4) pour entrer en contact, en cours d'utilisation, avec l'élément de coupe (16).

2. Gabarit de coupe tel que revendiqué dans la revendication 1, dans lequel la pluralité de paliers (15) est une pluralité de paliers à éléments roulants, de préférence trois paliers à éléments roulants ou plus ;
et éventuellement la pluralité de paliers (15) est montée sur la paroi interne (6) de manière réglable, permettant à un degré de saillie de la pluralité de paliers (15) dans l'alésage central (4) d'être réglable.

3. Gabarit de coupe tel que revendiqué dans l'une des revendications précédentes, dans lequel le bord d'étanchéité externe (11) peut être dévié et/ou est compressible et/ou souple ;
et éventuellement dans lequel le bord d'étanchéité externe (11) est formé à partir d'un matériau souple ou compressible ;
et éventuellement dans lequel le bord d'étanchéité externe (11) comprend une bande de bord externe (17) qui est co-moulée au corps annulaire (2).

4. Gabarit de coupe tel que revendiqué dans l'une des revendications précédentes, dans lequel le rebord interne (9) a une forme crénelée (19) et la ou les plusieurs entrée(s) comprend/comprennent une pluralité d'espaces (20) formés au niveau du rebord interne (9) par la forme crénelée (19).

5. Gabarit de coupe tel que revendiqué dans l'une des revendications précédentes, dans lequel le rebord interne (9) comprend un bord interne (12) destiné à former un joint d'étanchéité partiel ;
et éventuellement dans lequel le bord interne (12) est formé à partir d'un matériau non marquant ;
et éventuellement dans lequel le bord interne (12) comprend une bande de bord interne (18) qui est co-moulée au corps annulaire (2).

6. Gabarit de coupe tel que revendiqué dans l'une des revendications précédentes, dans lequel le corps annulaire (2) est toroïdal.

7. Gabarit de coupe tel que revendiqué dans l'une des revendications précédentes, dans lequel l'orifice d'aspiration (14) comprend une ouverture (21) dans le corps annulaire (2) pour raccorder directement un tuyau flexible d'un dispositif à vide ; ou
dans lequel l'orifice d'aspiration (14) comprend un adaptateur (141), de préférence conique et souple ou formé d'un matériau élastomère pour assurer une bonne étanchéité, s'étendant depuis le corps annulaire (2) pour raccorder un tuyau flexible d'un dispositif à vide.

8. Gabarit de coupe tel que revendiqué dans l'une des revendications précédentes, dans lequel le corps annulaire (2) comprend deux parties de corps (2a-2c) ou plus, y compris au moins une partie de corps externe (2a) comprenant la paroi externe (5) et une partie de corps interne (2b, 2c) comprenant la paroi interne (6b, 6c), où les deux parties de corps ou plus peuvant être raccordées et détachées l'une de l'autre ;
et comprenant éventuellement en outre au moins une première partie de corps interne (2b) définissant un alésage central (4b) d'un premier diamètre et une deuxième partie de corps interne (2c) définissant un alésage central (4c) d'un deuxième diamètre, où les première et deuxième parties de corps internes (2b, 2c) peuvent être couplées sélectivement de manière interchangeable à la partie de corps externe (2a) pour produire un gabarit de coupe (1) ayant un alésage central (4) de diamètre pouvant être sélectionné.

9. Aide à la coupe comprenant un gabarit de coupe (1) tel que revendiqué dans l'une des revendications 1 à 6 ou 8 et un dispositif à vide qui est raccordé d'un seul tenant à l'orifice d'aspiration (14) du corps annulaire (2).

10. Kit de pièces comprenant un gabarit de coupe (1) tel que revendiqué dans l'une des revendications 1 à 8 et un élément de coupe (16) d'un outil de travail, dans lequel un diamètre externe de l'élément de coupe (16) est dimensionné de manière à pouvoir être reçu dans l'alésage central (4) du gabarit de coupe (1) pour permettre à l'élément de coupe (16) d'être guidé en rotation par le ou les plusieurs palier(s).

11. Kit de pièces tel que revendiqué dans la revendication 10, dans lequel l'élément de coupe (16) est dimensionné de manière à pouvoir être reçu dans l'alésage central (4) du gabarit de coupe (1) de manière à fournir un espace de dégagement annulaire (28), en cours d'utilisation, entre l'élément de coupe (16) et la paroi interne (6), où de préférence l'espace de dégagement annulaire (28) est compris entre 2 et 5 mm.

12. Kit de pièces comprenant un gabarit de coupe (1) tel que revendiqué dans l'une des revendications 1 à 8 et un ou plusieurs luminaire(s), dans lequel l'alésage central (4) du gabarit de coupe (1) est dimensionné pour permettre la formation d'un trou dans une pièce à usiner (10) d'une taille requise pour le montage des luminaires.

13. Procédé de coupe d'un trou dans une pièce à usiner (10) en utilisant un gabarit de coupe (1) tel que revendiqué dans l'une des revendications 1 à 8, ou une aide à la coupe telle que revendiquée dans la revendication 9, ou un kit de pièces tel que revendiqué dans l'une quelconque des revendications 10 à 12, le procédé comprenant les étapes consistant :
a) à appliquer une force d'aspiration sur l'orifice d'aspiration (14) du gabarit de coupe (1) ;
b) à positionner le gabarit de coupe (1) sur la pièce à usiner (10) avec l'alésage central (4) du gabarit de coupe aligné avec un emplacement souhaité pour le trou à couper ;
c) à mettre en prise les rebords externe et interne (8, 9) du gabarit de coupe (1) sur la pièce à usiner (10) pour fixer et retenir le gabarit de coupe sur la pièce à usiner de manière autoportante ;
d) à insérer un élément de coupe (16) d'un outil de travail dans l'alésage central (4) et à faire fonctionner l'outil de travail pour amener l'élément de coupe (16) à couper le trou dans la pièce à usiner (1) tout en aspirant simultanément l'air et la poussière de l'alésage central (4) dans la chambre de dépoussiérage (3) à travers la ou les plusieurs entrée(s) (13) et en extrayant l'air et la poussière de la chambre de dépoussiérage (3) du gabarit de coupe à travers l'orifice d'aspiration (14) ;
e) à retirer l'élément de coupe (16) de l'alésage central (4) ; et
f) dans n'importe quel ordre : à détacher le gabarit de coupe (1) de la pièce à usiner (10) et à supprimer la force d'aspiration de l'orifice d'aspiration (14).

14. Procédé de la revendication 13, dans lequel la coupe du trou dans la pièce à usiner (10) comprend l'agrandissement d'un trou préexistant de la pièce à usiner (10) situé à ou près de l'emplacement souhaité, où, à l'étape b), le gabarit de coupe (1) est situé sur la pièce à usiner (10) avec l'alésage central (4) recouvrant le trou préexistant.
